# EUROPEAN PATENT APPLICATION

(11) **EP 2 052 852 A1**
(43) Date of publication of application: **29.04.2009**
(21) Application number: 08167323.8
(22) Date of filing: 22.10.2008
(51) Int. Cl.: B32B 17/06

(54) **Panel for providing interior decoration components or light diffusers**

(30) Priority: 24.10.2007 IT VR20070151
(71) Applicant: Janus S.R.L., 37010 Sant'Ambrogio Valpolicella VR (IT)
(72) Inventor: Fedrigoli, Pietro Lorenzo, 37015 Sant'ambrogio Di Valpolicella (IT)
(74) Representative: Modiano, Micaela Nadia

(57) **Abstract**

A panel (1) for providing interior decoration components or light diffusers, comprising a plate-like body (2) that has at least one first layer (3) made of stone-like material and at least one second layer (4) made of glass, at least one penetration-resistant safety layer (5) being provided between the first layer (3) and the second layer (4).

## Description

The present invention relates to a panel for providing interior decoration components or light diffusers.

It is known to use plates of stone-like material, such as marble or granite, to provide interior decoration components, such as pieces of furniture or the like, or to manufacture lampshades or light diffusers to be applied to lamps or other lighting devices, such as skylights or the like.

As can be deduced easily, in this type of applications the need is particularly felt to have plates of stone-like material that have a very low thickness, so that in general they have a relatively low weight and, if required, are adequately transparent to light, especially if they are used to provide light diffusers. However, with conventional methods, thin plates of stone-like material are extremely fragile and therefore easily subject to breakage, with severe risk for the safety and health of the users.

Moreover, the provision of plates of stone-like material of a thickness below 6-7 mm is difficult to perform by means of the traditional presser roller polishing or gauging machines that are currently used, since they tend to subject the plates being worked to considerable stresses that may cause cracks in the plates during the working cycle.

In order to try to at least partly solve these drawbacks, shades for lamps have been proposed, for example, which are composed of panels, which are obtained by mating, by adhesive bonding, a marble plate with a tempered glass plate, which allows to reinforce the marble plate without limiting the transparency of the panel, and by then reducing the thickness of the marble plate by removing the excess material.

This solution has not proved to be entirely satisfactory since, besides not providing in any case the appropriate assurances of mechanical strength, it entails some manufacturing drawbacks.

Although the use of tempered glass has been found to be preferable with respect to the use of ordinary glass, due to its superior mechanical characteristics, tempered glass however has the drawback that it is very difficult to cut.

Moreover, in this case also, considerable difficulty has been observed in bringing the thickness of the panel to values below 5-6 mm by means of traditional polishing or gauging machines.

Besides, the use of ordinary glass instead of tempered glass entails the risk that the panel may crack, in case of breakage, into many small pieces, being therefore extremely dangerous.

The aim of the present invention is to devise a solution to the problems described above by providing a panel for providing transparent or opaque interior decoration components or light diffusers, which has optimum characteristics of mechanical strength, so as to offer great assurances of safety against any accidental breakages.

Within this aim, an object of the invention is to provide a panel that is extremely thin, so that it has a low weight and considerable aesthetic and optical transparency characteristics and most of all is extremely safe in case of breakage.

Another object of the present invention is to provide a panel which, thanks to its particular structural characteristics, can have high versatility in use.

Still another object of the present invention is to provide a panel that can be obtained easily starting from commonly commercially available elements and materials and is also advantageous from a merely economical standpoint.

This aim, as well as these and other objects which will become better apparent hereinafter, are achieved by a panel for providing interior decoration components or light diffusers, according to the invention, as defined in claim 1.

This aim is further achieved by a method according to claim 9.

Further characteristics and advantages of the invention will become better apparent from the description of some preferred but not exclusive embodiments of the panel according to the invention, illustrated by way of non-limiting example in the accompanying drawings, wherein:

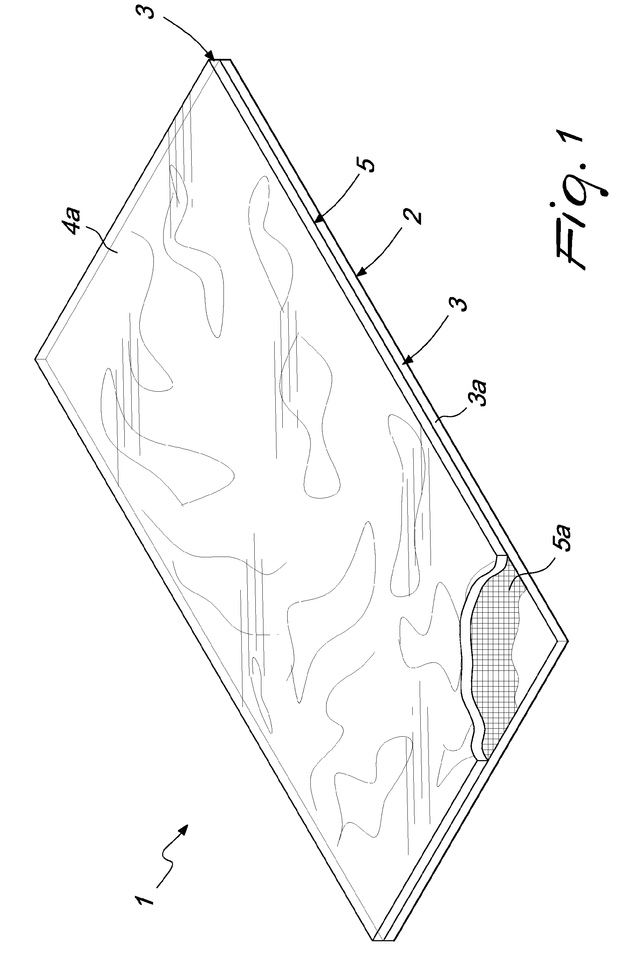

Figure 1 is a partially cutout perspective view of the panel according to the invention;

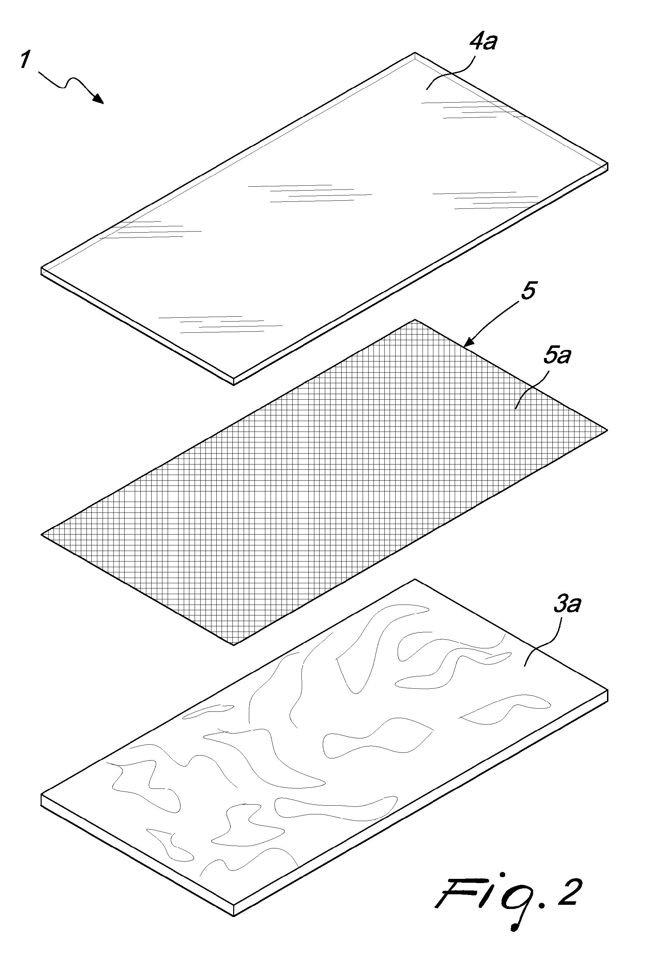

Figure 2 is an exploded perspective view of the panel according to the invention;
Figure 3 is a schematic perspective view of an apparatus that can be used to manufacture the panel according to the invention;

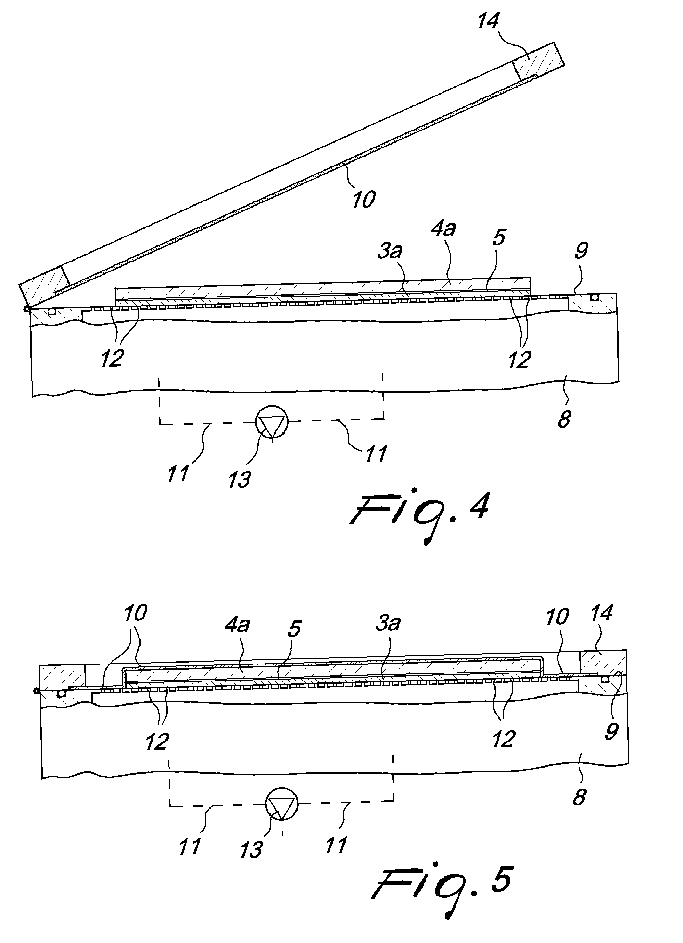

Figure 4 is a schematic sectional view of the apparatus of Figure 3 in a step that is a preliminary to its activation;
Figure 5 is a schematic sectional view of the apparatus of Figure 3 in a step of operation;
Figure 6 is a schematic side elevation view of a machine tool for gauging panels made of stone-like material that can be used to provide the panel according to the invention;

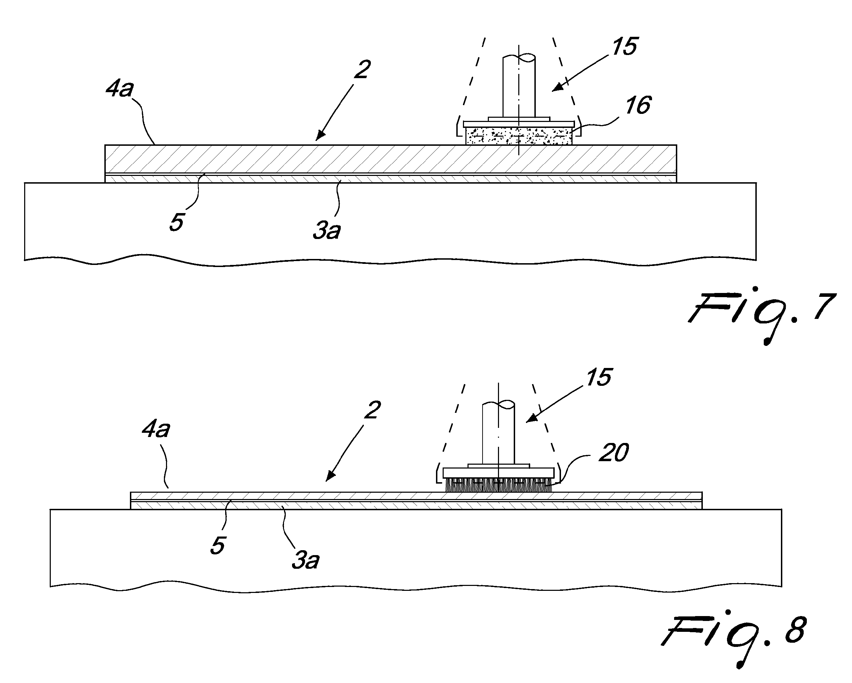

Figure 7 is a schematic side view of a step for gauging the panel according to the invention;
Figure 8 is a schematic view of a step of the coating of the surface of the panel according to the invention.

With reference to the figures, the panel for providing interior decoration components or light diffusers, according to the invention, generally designated by the reference numeral 1, comprises a plate-like body 2, which has at least one first layer 3, made of stone-like material, and at least one second layer 4, made of glass.

It should be noted that, if the panel according to the invention is used in the provision of light diffusers, the plate-like body 2 is, as a whole, at least partially optically transparent. Of course, nothing forbids, for other applications of the panel, the plate-like body 2 from being completely opaque.

According to the invention, at least one penetration-resistant safety layer 5 is interposed between the first layer 3 and the second layer 4 and is designed to provide the plate-like body 2 with high mechanical strength and at the same time keep its fragments connected in case of breakage.

Advantageously, thanks to the presence of the penetration-resistant safety layer 5, the plate-like body 2 can have an extremely low thickness. In particular, for example, the thickness of the plate-like body 2 can range substantially from 3.5 mm to 4.5 mm.

In detail, the penetration-resistant safety layer 5 can conveniently comprise a woven fabric 5a, made of glass filament, which, in addition to providing extremely high-level mechanical characteristics, is not visible, when the panel is viewed against the light, so as to allow adequate use of the panel as a lampshade or light diffuser in general.

By way of example, the woven fabric 5a can have a weight ranging substantially from 0.48 to 0.72 kg/m and a thickness ranging substantially from 0.05 to 0.06 mm and have conveniently a composition that ranges substantially from 16 to 23.5 filaments/cm, so as to have a tensile strength of more than 60 N/cm.

The first layer 3 is conveniently connected firmly to the second layer 4 by interposing a layer of binding material, constituted for example by an epoxy resin.

Conveniently, the woven fabric 5a can be arranged between the first layer 3 and the second layer 4 so as to be completely embedded within the layer of binding material.

According to a possible embodiment, the penetration-resistant safety layer 5 can comprise advantageously at least one reinforcement lamina made of plastics with high mechanical strength, such as for example a film made of vinyl.

In this case, the coupling between the first layer 3 and the second layer 4 can advantageously be performed by utilizing any adhesive properties of the reinforcement lamina used to provide the penetration-resistant safety layer 5. In this manner, the reinforcement lamina thus constitutes in practice also the layer of binding material.

More particularly, the reinforcement lamina can be provided for example by at least one adhesive sheet made of ethyl vinyl acetate (EVA) or polyvinyl butyral (PVB) or of another similar material, which is interposed between the first and second layers 3 and 4 and which, once activated adequately by heating, can act validly as a binding material in order to achieve the stable coupling of the first layer 3 with the second layer 4.

It should be noted that the penetration-resistant safety layer 5 can also be advantageously provided by using a woven fabric 5a made of glass filament, which is interposed between two adhesive sheets made of EVA or PVB, which allow to join the woven fabric 5a to the first layer 3 and to the second layer 4 and join such layers to each other.

Preferably, the first layer 3 is constituted by a marble plate 3a that is approximately 2 mm thick, while the second layer 4 is provided by means of a glass plate 4a, which is not necessarily of the tempered type and also has a thickness of approximately 2 mm.

For the practical provision of the panel according to the invention, one proceeds initially by mating, so that they face each other, the marble plate 3a, which will constitute the first layer 3 and which, initially, may have a thickness of 6-8 mm, and the glass plate 4a, which is instead designed to constitute the second layer 4, by interposing between the two plates 3a, 4a the layer of binding material and the penetration-resistant safety layer 5.

In particular, if the penetration-resistant safety layer 5 is provided by means of the woven fabric 5a, such fabric, before being interposed between the marble plate 3a and the glass plate 4a, is advantageously coated by spreading, preferably on both sides, with a layer of binding material in the liquid state, which can be constituted by an epoxy resin, as mentioned above.

If instead the penetration-resistant safety layer 5 is provided by means of a reinforcement lamina that has adhesive properties, and more particularly by using at least one adhesive sheet made of ethyl vinyl acetate (EVA) or polyvinyl butyral (PVB), one can simply interpose between the marble plate 3a and the glass plate 4a at least one adhesive sheet of ethyl vinyl acetate (EVA) or polyvinyl butyral (PVB), even without the addition of an additional layer of binding material, since in this case the layer of binding material that allows to join the marble plate 3a and the glass plate 4a is provided by such adhesive sheets made of ethyl vinyl acetate (EVA) or polyvinyl butyral (PVB).

At this point, before the layer of binding material begins to solidify, any air bubbles that might remain trapped in the layer of binding material or in general between the marble plate 3a and the glass plate 4a, with the risk of compromising both the mechanical strength of the finished panel and its aesthetic characteristics against the light, are eliminated.

In particular, in order to eliminate the air that is present between the marble plate 3a and the glass plate 4a, one proceeds conveniently by applying, between the marble plate 3a and the glass plate 4a, a partial vacuum, which is advantageously obtained by creating vacuum in the space located around the marble plate 3 a and the glass plate 4a.

Moreover, again in order to eliminate the air that is present between the marble plate 3a and the glass plate 4a, it is conveniently possible to apply compression between the marble plate 3a and the glass plate 4a, so as to obtain a compression of the layer of binding material and of the penetration-resistant safety layer 5 that allows the escape of the air that is trapped between the marble plate 3a and the glass plate 4a.

It should be noted that it is preferable to compress the layer of binding material and the penetration-resistant safety layer 5 simultaneously with the creation of the vacuum in the space that surrounds the marble plate 3a and the glass plate 4a, so as to obtain a combined effect of the two actions.

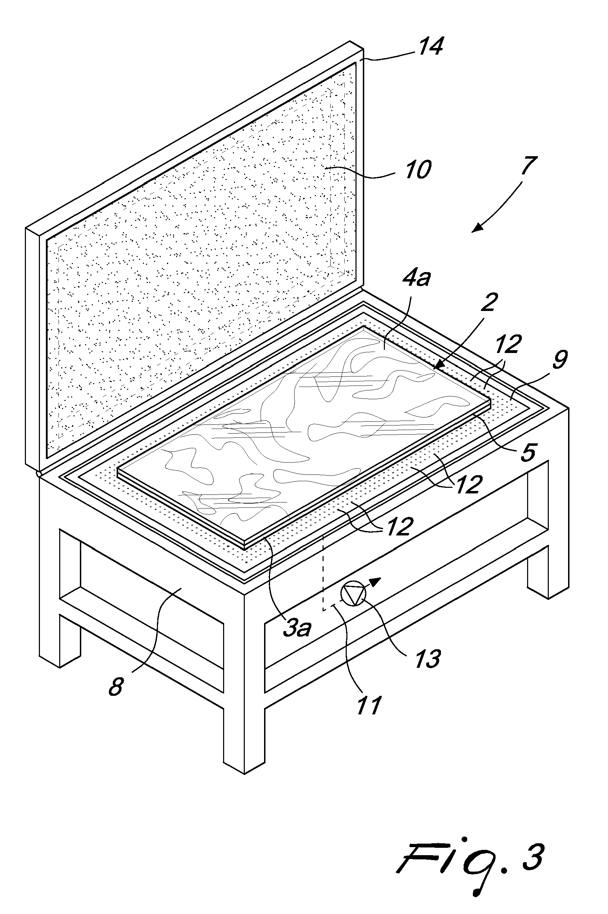

Advantageously, the operation for coupling the marble plate 3 a to the glass plate 4a and the subsequent elimination of the air that is present between the marble plate 3a and the glass plate 4a can be performed by using an apparatus, generally designated by the reference numeral 7 in Figure 3, which comprises a footing 8, which forms a supporting surface 9 on which it is possible to stack the marble plate 3a and the glass plate 4a, interposing between them the layer of binding material and the penetration-resistant safety layer 5, as explained earlier.

As shown, the apparatus 7 is provided with a flexible membrane 10, which is designed to be rested on the plates 3a and 4a, which are stacked on its supporting surface 9, and can be connected peripherally and hermetically to the footing 8.

Moreover, the footing 8 is provided with at least one channel 11, which through a plurality of suction ports 12, advantageously formed in the supporting surface 9, allows to connect the upper region of the supporting surface 9 to a suction pump 13, which can be activated on command to create an at least partial vacuum in the interspace that is formed between the supporting surface 9 and the flexible membrane 10, when it is spread over the layers 3a and 4a that are stacked on the supporting surface 9.

In practice, as a consequence of the activation of the suction pump 13, one obtains a partial vacuum around the plates 3a and 4a which facilitates the evacuation of the air bubbles interposed between them and, at the same time, a compression of the flexible membrane 10 against the plates 3a, 4a stacked on the supporting surface 9, so as to produce the compression of the layer of binding material and of the penetration-resistant safety layer 5, thus ensuring complete elimination of the air that is present between the two plates 3a and 4a.

Advantageously, the flexible membrane 10 is connected perimetrically to a supporting frame 14, which is pivoted to the footing 8, so as to allow the passage of the flexible membrane 10 from an inactive position, in which it is spaced from the supporting surface 9, to an active position, in which it is moved closer to the supporting surface 9 and is connected hermetically, by means of the supporting frame 14, to the footing 8, and vice versa.

Conveniently, the apparatus 7 is also provided with means for heating the supporting surface 9, which are constituted for example by an electrical resistor and can be activated on command in order to raise the temperature of the layer of binding material, so as to accelerate its hardening.

It should be noted that if the layer of binding material and the penetration-resistant safety layer 5 are constituted by means of an adhesive sheet made of EVA or PVB, the temperature increase is performed until the melting point of the adhesive sheet made of EVA or PVB is reached, so that as a consequence of its cooling it is possible to achieve its hardening and consequent heat-sealing of the marble plate 3a to the glass plate 4a.

At this point, once the air that is present between the marble plate 3a and the glass plate 4a has been eliminated, and once the layer of binding material has been made to act, so as to provide the perfect coupling of the marble plate 3a with the glass plate 4a, it is optionally possible to perform on the marble plate 3a a removal of material so as to reduce its thickness to the desired value.

More particularly, this removal of material consists preferably in performing a gauging of the marble plate 3a, in order to give it a substantially constant thickness of approximately 2 mm.

Advantageously, in order to achieve such a thickness of the marble plate 3a, which cannot be obtained with traditional work for polishing under pressure without the risk of breaking the panel, gauging of the marble plate 3a is performed, optionally with multiple subsequent treatments, by means of one or more working heads 15, which are provided with an abrasive plate 16 with diamond sectors, which is actuated so as to rotate about an axis 16a, which is perpendicular to the plane of arrangement of the marble plate 3a and allows to remove the excess material by performing a translational motion, with respect to the marble plate 3a, along an advancement direction that is substantially parallel to the plane of arrangement of the marble plate 3a.

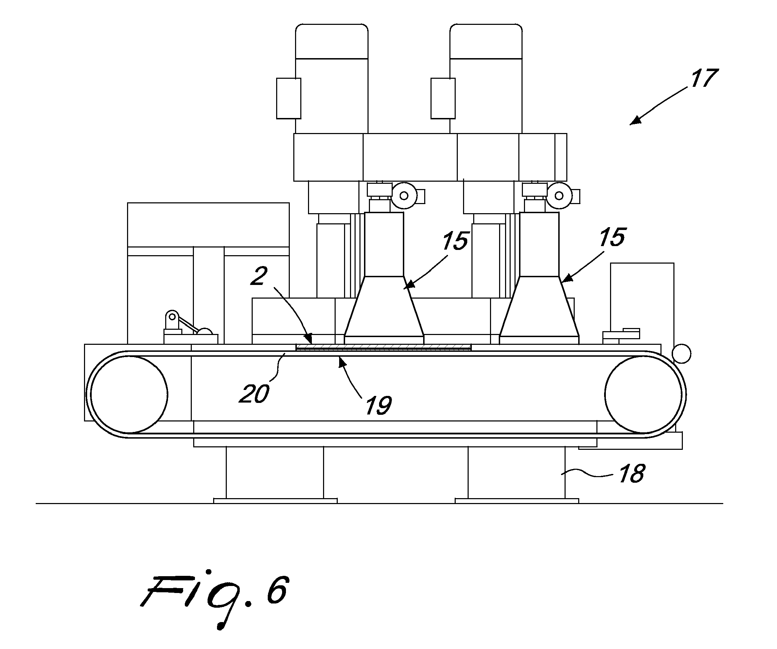

In particular, this type of gauging can be conveniently performed on a machine tool 17, shown schematically in Figure 6, which has a base frame 18 on which there is a conveyor 19, which allows to move the panels to be worked along an advancement direction and is constituted for example by a moving belt 20.

On the frame 18 there is further, above the conveyor 19, at least one working head 15, which can perform a translational motion at right angles to the conveyor 19, in order to allow the possibility to vary the gauging thickness according to the requirements.

More preferably, the machine tool 17 has at least two working heads 15, which work in succession, performing a gradual thickness reduction without compressing excessively the panel being worked.

The peculiarity of the machine tool 17 resides in that each working head 15 has a spindle with an axis that is substantially perpendicular to the plane of arrangement of the panels to be gauged and is capable of supporting and turning, about its own axis, an abrasive plate 16 with diamond sectors.

Preferably, the abrasive plates 16 with diamond sectors have a coupling for mating with the spindle of the so-called "Frankfurt" type.

With the described structure of the machine tool 17, it is possible to remove material from the marble plate 3a without causing excessive tensions in the panel being worked, and therefore it is possible to achieve a high reduction in the thickness of the panel, providing precise and uniform machining of the surface of the marble plate 3a, achieving its gauging to a considerably low thickness.

Once the gauging of the marble plate 3a has been performed, it is conveniently possible to also perform a coating of its exposed surface, for example by replacing, on the spindles of the working heads 15 of the machine tool 17, the abrasive plates 16 with diamond sectors with plates provided with sectors of bristles 21 with diamond yarns, which are turned by the spindles of the working heads 15 about an axis of rotation that is perpendicular to the plane of arrangement of the marble plate 3a.

Once this operation also has ended, it is therefore possible to obtain a finished panel whose thickness ranges substantially from 3.5 to 4.5 mm, with a layer 3 of stone-like material that is approximately 2 mm thick and is perfectly transparent to light and extremely lightweight and strong.

From what has been described above, it is evident that, thanks to its structure, the panel according to the invention is capable of fully achieving its intended aim and objects, since it has characteristics of strength, light weight and optionally transparency that make it perfectly suitable to provide interior decoration components, such as pieces of furniture or the like, or light diffusers, in general, and lampshades for lamps or other lighting devices, in particular.

It should further be stressed that the panel according to the invention is capable of offering high assurances of safety against any accidental breakages.

Another advantage of the invention is to provide a method that allows to provide panels that are extremely thin and perfectly finished.

All the characteristics of the invention indicated above as advantageous, convenient or the like may also be omitted or be replaced with equivalents.

The individual characteristics described with reference to general teachings or to particular embodiments may all be present in other embodiments or may replace characteristics in these embodiments.

The invention thus conceived is susceptible of numerous modifications and variations, all of which are within the scope of the appended claims.

In practice, the materials used, so long as they are compatible with the specific use, as well as the shapes and dimensions, may be any according to requirements.

Moreover, all the details may be replaced with other technically equivalent elements.

The disclosures in Italian Patent Application no. VR2007A000151, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A panel for providing interior decoration components or light diffusers, comprising a plate-like body that has at least one first layer made of stone-like material and at least one second layer made of glass, **characterized in that** it comprises, between said first layer and said second layer, at least one penetration-resistant safety layer.

2. The panel according to claim 1, **characterized in that** said plate-like body has a thickness ranging substantially from 3.5 mm to 4.5 mm.

3. The panel according to one or more of the preceding claims, **characterized in that** said at least one penetration-resistant safety layer comprises at least one woven fabric made of glass yarn.

4. The panel according to one or more of the preceding claims, **characterized in that** said at least one penetration-resistant safety layer comprises at least one reinforcement lamina made of plastics with high mechanical strength.

5. The panel according to one or more of the preceding claims, **characterized in that** said at least one reinforcement lamina is constituted by at least one adhesive sheet made of ethyl vinyl acetate or polyvinyl butyral.

6. The panel according to one or more of the preceding claims, **characterized in that** said first layer is connected to said second layer by means of the interposition of a layer of binding material.

7. The panel according to one or more of the preceding claims, **characterized in that** said binding material comprises an epoxy resin.

8. The panel according to one or more of the preceding claims, **characterized in that** said binding material is constituted by said at least one adhesive sheet made of ethyl vinyl acetate or polyvinyl butyral.

9. A method for manufacturing a panel for providing interior decoration components or light diffusers, **characterized in that** is comprises the steps of:
- mutually coupling, so that they face each other, a marble plate and a glass plate, interposing at least one layer of binding material and at least one penetration-resistant safety layer;
- eliminating the air that is present between said marble plate and said glass plate;
- making said at least one layer of binding material act to achieve the coupling of said marble plate and said glass plate.

10. The method according to claim 9, **characterized in that** said step for eliminating the air provides for a step that consists in applying a partial vacuum between said marble plate and said glass plate.

11. The method according to one or more of claims 9 and 10, **characterized in that** said air elimination step provides for a step that consists in applying compression between said marble plate and said glass plate.

12. The method according to one or more of claims 9-11, **characterized in that** said coupling step and said air elimination step consist in stacking, on a supporting surface, said marble plate and said glass plate with the interposition of said at least one layer of binding material and of said at least one penetration-resistant safety layer; in applying over said marble plate and said glass plate, stacked on said supporting surface, a flexible membrane; in creating a vacuum in the interspace delimited by said flexible membrane and said supporting surface in order to produce a compression of said flexible membrane toward said supporting surface and thus obtain a compression of said at least one layer of binding-material and of said at least one penetration-resistant safety layer between said marble plate and said glass plate.

13. The method according to one or more of claims 9-12, **characterized in that** said step that consists in making said at least one layer of binding material act is performed by heating said at least one layer of binding material.

14. The method according to one or more of claims 9-13,
**characterized in that**, after said step that consists in reacting said at least one layer of binding material, there is a step for removing material from said marble plate so as to bring its thickness to a predefined value, said material removal step comprising a step for gauging said marble plate, in which the thickness of said marble plate is reduced to approximately 2 mm.

15. The method according to one or more of claims 9-14, **characterized in that** said gauging step is performed by using at least one gauging tool, which is constituted by an abrasive plate with diamond sectors which is actuated rotatably about an axis that is perpendicular to the plane of arrangement of said marble plate and performs a translational motion, with respect to said marble plate, along an advancement direction that is substantially parallel to the plane of arrangement of said marble plate.
